# EUROPÄISCHE PATENTANMELDUNG

(11) **EP 3 114 915 A1**
(43) Veröffentlichungstag der Anmeldung: **11.01.2017**
(21) Anmeldenummer: 16177812.1
(22) Anmeldetag: 04.07.2016
(51) Int. Cl.: A01B 15/02, A01B 35/26, E02F 3/815

(54) **WERKZEUG UND HARTSTOFFELEMENT FÜR EIN WERKZEUG**

(30) Priorität: 03.07.2015 DE 102015110786
(71) Anmelder: Betek GmbH & Co. KG, 78733 Aichhalden (DE)
(72) Erfinder: Smmets, Florian, 69221 Dossenheim (DE); Krämer, Ulrich, 77709 Wolfach (DE); Essig, Wolfgang, 72348 Rosenfeld (DE)
(74) Vertreter: Herrmann, Jochen

(57) **Zusammenfassung**

Die Erfindung betrifft ein Werkzeug zur Bearbeitung von Erd-, Gestein-, oder Mineralienschichten, insbesondere von landwirtschaftlichen Flächen, von Straßen und/oder für den Abbau von Gestein und/oder Mineralien, als Schutzelement für Trägersysteme, zur Anordnung von Hartstoffelementen und/oder als Leitelement zur richtungsleitenden Verwendung von vorwiegend fließenden Erd-, Gestein-, oder Mineralienschichten, wobei das Werkzeug einen Träger aufweist, der an einem Arbeitsabschnitt wenigstens ein Hartstoffelement trägt, wobei das Hartstoffelement einen Ansatz aufweist, der einen Arbeitsbereich, insbesondere einen Schneidbereich bildet. Zur Optimierung der Standzeit eines solchen Werkzeuges ist es erfindungsgemäß vorgesehen, dass an den Arbeitsbereich zwei Schenkel des Hartstoffelements angeschlossen sind, die zueinander im Winkel ausgerichtet sind.

## Beschreibung

Die Erfindung betrifft ein Werkzeug mit einem Hartstoffelement, welches als Schneid-, Schutz-, und/oder Leitelement ausgebildet ist, wobei das Hartstoffelement, beispielsweise als Schneidelement zur Bearbeitung von Erd-, Gestein-, oder Mineralienschichten, insbesondere von landwirtschaftlichen Flächen, von Straßen und/oder für den Abbau von Gestein und/oder Mineralien, als Schutzelement für Trägersysteme von landwirtschaftlichen Maschinen, beispielsweise von Pflügen und/oder als Leitelement zur richtungsleitenden Verwendung von vorwiegend fließenden Erd-, Gestein-, oder Mineralienschichten ausgebildet ist.

Die Erfindung betrifft auch ein Hartstoffelement zur Verwendung in einem solchen Werkzeug

Aus dem Stand der Technik ist eine Vielzahl von Ausführungsvarianten von Hartstoffelementen bekannt, beispielsweise für die Bearbeitung von landwirtschaftlichen Flächen, Straßen bzw. Gestein- und Mineralienschichten bekannt. Beispielsweise ist in der DE 20 2009 008 582 U1 ein auf einem Träger angeordnetes Werkzeug für eine Bodenbearbeitung gezeigt, welches einen Schneidbereich mit einer Schneidkante aufweist, wobei ein im Schneidbereich angeordnetes Schneidelement zumindest ein Teil der Schneidkante bildet.

Für eine derartige Anwendung sollte das Hartstoffelement eine ausreichende Zähigkeit aufweisen, damit dieses bei stoßartigen Belastungen, beispielsweise durch einen auftreffenden Stein nicht bricht. Zudem ist eine ausreichende Härte gefordert, um den abrasiven Verschleiß zu verringern. Diese Eigenschaften können dadurch erreicht werden, indem das Hartstoffelement beispielsweise aus einem Hartmetall gebildet ist.

In der Ausbildung eines Hartstoffelementes als Schutzelement, ist beispielsweise der abrasive Angriff eines abzutragenden Oberflächenmaterials im Bereich hinter einem Schneidelement eines Pflugschars zu verringern. Da dieser Bereich stark ausgewaschen wird, ist die Folge das Fehlen einer erforderlichen Abstützung des Schneidelementes, was im Einsatz einen Abbruch des Schneidelementes zur Folge hat.

Als Leitelement ist die Ausbildung eines Hartstoffelementes beispielsweise für ein richtungsgebendes Leiten von fließfähigen Materialien bekannt, beispielsweise in der Siebtechnik.

Es ist Aufgabe der Erfindung, ein Werkzeug der eingangs erwähnten Art zu schaffen, das eine optimierte Verwendung des Hartstoffelementes als Schneid-, Schutz-, und/oder Leitelement ermöglicht.

Es ist weiterhin Aufgabe der Erfindung ein derartiges Hartstoffelement zur Verwendung in einem gattungsgemäßen Werkzeug zur Verfügung zu stellen

Erfindungsgemäß wird die Geometrie des Hartstoffelementes so gestaltet, dass es einen Ansatz bildet, der mit einem Arbeitsbereich ausgestattet ist. An den Ansatz schließen sich zwei Schenkel an, die zueinander im Winkel stehen. Mit den Schenkeln kann der Anschlussbereich zwischen dem Arbeitsbereich und dem Träger effektiv vor Verschleiß geschützt werden. Insbesondere in diesen Bereichen tritt eine hohe abrassiven Belastung auf, die durch das Hartstoffelement zuverlässig aufgenommen wird. Die Schenkel verhindern ein Auswaschen des Trägers in dem geschützten Bereich. Das an das Hartstoffelement anschließende Material des Trägers wird dann nur noch vergleichsweise gering abrasiv belastet. Damit kann eine deutliche Standzeitverlängerung für das Werkzeug erreicht werden, wobei die erforderliche Masse des teuren Hartstoffmaterials auf ein Minimum beschränkt wird. Der hochbelastete Arbeitsbereich, insbesondere Schneidbereich wird von dem Hartstoff-Element gebildet und ist daher hervorragend zur Aufnahme der auftretenden Belastungen geeignet.

Erfindungsgemäß sind an den Ansatz zwei Schenkel angeschlossen. Auf diese Weise lässt sich der an den Ansatz anschließende Übergangsbereich des Trägers beidseitig des Arbeitsbereiches optimal vor Verschleiß schützen. Hier kann insbesondere dem üblicherweise auf den beiden Seiten des Trägers unterschiedlichem Verschleißverhalten kostenoptimierter Rechnung getragen werden.

Die Erfindung lässt sich auch insbesondere bei solchen Anwendungsfällen einsetzen, bei denen die Beanspruchung, herrührend von dem zu bearbeitenden Material, insbesondere Bodenmaterial beidseitig auf den Arbeitsbereich einwirkt.

Gemäß einer bevorzugten Erfindungsvariante kann es vorgesehen sein, dass die Schenkel über einen Übergangsabschnitt zueinander beabstandet gehalten sind, und dass der Übergangsabschnitt insbesondere als Rundung ausgebildet ist oder insbesondere eine Rundungsabschnitt aufweist. Über die Rundungsübergänge lassen sich Kerbspannungen im Hartstoffelement reduzieren. Mit dem Übergangsabschnitt lassen sich auch relativ dünnwandige Schenkel, bei gleichzeitig hohem Materialanteil im stark belasteten Bereich des Ansatzes verwirklichen. Dies stellt eine weitere verschleißoptimierte Gestaltung dar.

Gemäß einer denkbaren Erfindungsvariante kann es vorgesehen sein, dass zumindest einer der Schenkeln auf seiner Außenfläche eine Einmuldung und/oder eine Erhebung aufweist, wobei die Einmuldung und oder die Erhebung insbesondere in die Außenfläche des Schenkels zumindest bereichsweise, vorzugsweise kontinuierlich übergeht. Die Einmuldung kann eine konkave Form haben. Die Erhebung kann eine konvexe Gestalt aufweisen. Mit der Einmuldung und/oder der Erhebung lässt sich der Materialfluss im Anschluss an den Arbeitsbereich steuern. Insbesondere kann hierdurch ein Design verwirklicht werden, bei dem das vom Arbeitsbereich, insbesondere Schneidbereich bewegte Material nach außen abgeleitet wird, so dass der Anschlussbereich zwischen Träger und Hartstoffelement von Verschleiß entlastet wird.

Eine denkbare Erfindungsvariante ist dergestalt, dass sich die Dicke des Schenkels, gemessen quer zur Längserstreckung zumindest bereichsweise verändert, vorzugsweise sich von der Anbindungsstelle an den Ansatz in Richtung auf das freie Ende des Schenkels verjüngt. Hierdurch wird eine materialoptimierte Gestaltung möglich. Auf diese Weise lässt sich eine Geometrie des Hartstoffelements verwirklichen, bei dem in optimierter Weise eine gleichmäßige Materialabnutzung über die gesamte Lebensdauer erfolgt . Dies trägt dem Gedanken Rechnung, dass das Hartstoffmaterial im Arbeitsbereich stärker verschleißt, als beispielsweise im Bereich der freien Enden der Schenkel. Für eine gleichmäßige Abnutzung, beispielsweise bei einem landwirtschaftlichen Bodenbearbeitungswerkzeug, wird es daher ausreichen, die freien Enden der Schenkel dünner auszuführen als den Ansatz.

Ein erfindungsgemäßes Werkzeug kann dergestalt sein, dass zumindest einer der Schenkel im Bereich seines freien Endes eine Abschlussfläche aufweist, die einer Stützfläche des Trägers zur Bildung eines Anschlags gegenübersteht. Auf diese Weise kann das Hartstoffelement definiert an dem Träger ausgerichtet werden. Dies ermöglicht eine genaue und maßhaltige Fixierung des Hartstoffelements auf dem Träger.

Das Hartstoffelement kann im Rahmen der Erfindung insbesondere von einem Hartmetall gebildet sein oder ein Hartmetall-Material aufweisen. Üblicherweise wird das Hartmetall mit dem Träger verlötet. Im Rahmen der Erfindung ist es insbesondere von Vorteil, wenn sich beide Schenkel unter Vermittlung von Lotmaterial gegenüber dem Träger abstützen. Insbesondere sollten die Schenkel vollflächig mit Lotmaterial hinterfangen sein, um eine stabile Befestigung zu erzeugen, die insbesondere unempfindlich ist gegen stoßartige Belastungen.

Eine weiter belastungsoptimierte Konstruktion kann beispielsweise dadurch erreicht werden, dass die Schenkel ausgehend von ihrer Anbindungsstelle an den Ansatz eine unterschiedliche Erstreckung in Längsrichtung der Schenkel aufweisen.

Erfindungsgemäß kann es vorgesehen sein, dass der Arbeitsbereich eine Schneide des Schneidbereich bildet oder das der Arbeitsbereich eine Verdrängerkante bildet, die insbesondere über gerundete Übergangsbereiche in die Außenflächen der Schenkel mittelbar oder unmittelbar übergeht. Wird eine Verdrängerkante verwendet, so kann das zu bearbeitende Material stumpf und großflächig verdrängt werden. Die Übergangsbereiche, welche von gerundeten Abschnitten gebildet werden, verhindern das Entstehen von Haarrissen, welche sich schnell zu Bruchrissen fortpflanzen können, insbesondere dann wenn hartes Material auf das Hartstoffelement auftrifft. Bei Einsatz einer Schneidkante hingegen kann ein definierter Schnitt des Materials zugunsten eines geringen Zugkraftbedarfs erfolgen.

Eine mögliche Erfindungsvariante kann dergestalt sein, dass zumindest einer der Schenkel in eine Ausnehmung des Trägers zumindest bereichsweise eingesetzt ist. Die Unterbringung des Schenkels in der Ausnehmung ermöglicht eine passgenaue Fertigung und Ausrichtung des Hartstoffelements. Während des Betriebseinsatzes kann das, den Schenkel zumindest teilweise überdeckende Material von dem vorbeibegleitenden Material abgeschliffen werden, bis der Schenkel freigesetzt wird. Dann entfaltet sich die volle Schutzwirkung des Schenkels.

Denkbar ist es auch, dass zumindest einer der Schenkel an seiner Außenfläche eine Stufe bildet. Diese kann beispielsweise als Leitkante für vorbei fließendes Material verwendet werden oder als Anschlag gegenüber dem Träger.

Eine besonders bevorzugte Erfindungsgestaltung ist derart, dass der Träger ein Entlastungselement zur Reduzierung der Bauteilsteifigkeit im Bereich des Hartstoffelements aufweist, insbesondere eine Ausnehmung aufweist. Durch das Entlastungselement wird gezielt die Festigkeit des Trägers reduziert. Wenn das Hartstoffelement mit dem Träger verbunden, beispielsweise verlötet wird, so entstehen fertigungsbedingt Bauteilspannungen, aufgrund unterschiedlicher thermischer Ausdehnungskoeffizienten. Damit diese Bauteilspannungen nicht oder nur geringfügig in das spröde Material des Hartstoffelement des eingebracht werden, wird das Entlastungselement verwendet. Dieses Entlastungselement nimmt die Dehnung zumindest teilweise auf und garantiert so eine sichere Befestigung des Hartstoffelements.

Wie bereits vorstehend erwähnt wurde kann mit der Erfindung der Auswaschungseffekt infolge des abrasiven Angriffs des abgetragenen Materials auf der Trägeroberfläche eines Werkzeugs, beispielsweise eines Pflugschars oder einer Grubberspitze oder dergleichen landwirtschaftliches Bodenbearbeitungswerkzeug deutlich verringert werden.

Eine weitere Verbesserung lässt sich dann erreichen, wenn vorgesehen ist, dass das Hartstoffelement werkstoffeinstückig ausgebildet ist. Dies führt zusätzlich zu einer deutlichen Standzeiterhöhung. Darüber hinaus können beispielsweise die Standzeiten eines Hartstoffelementes als Schneidelement und eines Trägers aufeinander abgestimmt werden.

Weist darüber hinaus ein Träger in seinem Schneidbereich eine Aufnahme für das Schneidelement auf, kann das Schneidelement in vorteilhafter Weise stoffschlüssig befestigt werden. Zusätzlich können die Schenkel die Funktion einer Ableitfläche, übernehmen, welche vorzugsweise flächenbündig in die Oberfläche des Trägers übergehen. Dadurch kann ein guter Abfluss des abzutragenden Materials gewährleitstet werden. Das erfindungsgemäße Hartstoffelement kann mit einem Träger beispielsweise verlötet oder verklebt werden.

Die Erfindung wird im folgenden anhand von in den Zeichnungen dargestellten Ausführungsbeispielen näher erläutert.

Es zeigen:
- Fig. 1:: eine Seitenansicht eines Hartstoffelementes;
- Fig. 2:: eine perspektivische Ansicht von oben auf das Schneidelement gemäß Figur 1;
- Fig. 3:: eine perspektivische Ansicht von unten auf das Schneidelement gemäß Figur 1;
- Fig. 4 - 12:: in Seitenansicht verschiedene Ausgestaltungen eines Werkzeugs mit einem Träger und einem Hartstoffelement;
- Fig. 13 und 14:: Werkzeuge, bei denen der Träger ein Entlastungselement aufweist,
- Fig. 16 - 19:: teilweise in perspektivischer Ansicht und teilweise in Seitenansicht Werkzeuge mit mehrteiligen Hartstoffelementen;
- Fig. 20:: ein Werkzeug mit einem Träger und einem Hartstoffelement, wobei zwischen dem Träger und dem Hartstoffelement eine Schiebeführung gebildet ist;
- Fig. 21-24:: weitere Ausgestaltungen von Werkzeugen, bei denen ein Entlastungselement Verwendung findet und
- Fig. 25:: einen Träger eines Werkzeugs mit einer strukturierten Oberfläche in Seitenansicht.

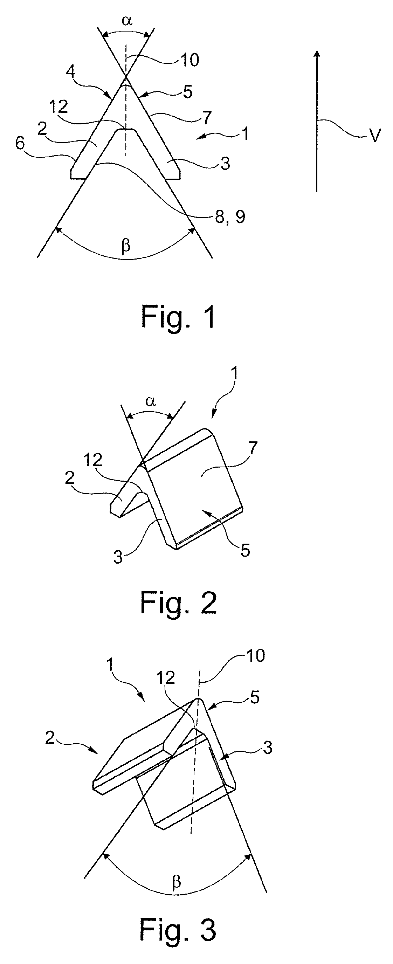

In Fig. 1 ist ein erfindungsgemäßes Hartstoffelement 1 in einer Seitenansicht gezeigt, wobei das hier dargestellte Ausführungsbeispiel des Hartstoffelementes 1 als Schneidelement für eine Scharspitze eines Pflugschars, einer Grubberspitze oder oder dergleichen landwirtschaftliches Bodenbearbeitungswerkzeug ausgebildet ist und im Schneidbereich des Bodenbearbeitungswerkzeugs mittels eine Klebeverbindung oder einer Lötverbindung angeordnet werden kann.

In dem hier dargestellten Ausführungsbeispiel gemäß Fig. 1 ist das Hartstoffelement 1 werkstoffeinstückig ausgebildet. Das Hartstoffelement 1 weist zwei im Winkel zueinander beabstandete Schenkel 2, 3 auf, wobei deren Außenoberflächen 6, 7 einen Winkel α bilden, welcher zwischen 0,1 ° und 180° liegt. Die Innenoberflächen 8, 9 der Schenkel 2, 3 sind in einem Winkel β zueinander beabstandet, welcher gleich oder ungleich dem Winkel α ist. Dadurch wird die Dicke der Schenkel 2, 3 definiert, welche je nach Anwendung variabel auszubilden ist.

An den beiden Schenkel 2, 3 ist ein Ansatz 4 angeformt, welcher den Schneidbereich 5 des Hartstoffelementes 1 bildet. Das Hartstoffelement 1 wird in der Verwendung als Schneidelement im Betrieb in Vorschubrichtung V bewegt, um das bestimmungsgemäße Schneiden oder Trennen des Materials vorzunehmen.

Die äußere Oberfläche 6 des Schenkels 2 im Schneidbereich 5 geht nahezu fließend in die äußere Oberfläche 7 des Schenkels 3 über und weist einen runden, einen scharfkantigen oder polygonen Verlauf auf.

Darüber hinaus kann es vorgesehen, dass die Oberflächen des Hartstoffelementes 1 mittels einer Oberflächenbearbeitung eine erhöhte Oberflächenrauheit aufweist, um eine verbesserte Hartlotverbindung oder Klebeverbindung zwischen den Flächen in der mehrteiligen Ausführungsform des Hartstoffelementes 1 zu bilden.

In einem weiteren, hier nicht dargestellten Ausführungsbeispiel des erfindungsgemäßen Hartstoffelementes 1 ist das Hartstoffelement 1 in einer mehrteiligen Ausführung ausgebildet, wobei das Hartstoffelement 1 beispielsweise mittels aneinanderfügen durch eine Klebeverbindung oder Hartlötverbindung an einer Trennfläche 10 zu dem erfindungsgemäßen Hartstoffelement 1 zusammengefügt werden kann.

In den Figuren 2 und 3 ist ein erfindungsgemäßes Hartstoffelement 1 in einer perspektivischen Ansicht von oben bzw. unten gezeigt, wobei sich gleiche Bezugszeichen auf gleiche Elemente bzw. Bauteile beziehen.

Wie Figur 1 erkennen lässt, sind die beiden Schenkel 2,3 an den Ansatz 4 einteilig angeformt. Dabei sind die Schenkel 2,3 über einen Übergangsabschnitt 12 zueinander beabstandet angeordnet. Der Übergangsabschnitt 12 wird dabei von dem Ansatz 4 gebildet. Der Übergangsabschnitt 12 kann, wie im gezeigten Ausführungsbeispiel einen geradlinigen Bereich aufweisen, der über gerundete Übergänge in die Innenoberflächen 8,9 der Schenkel 2,3 übergeht.

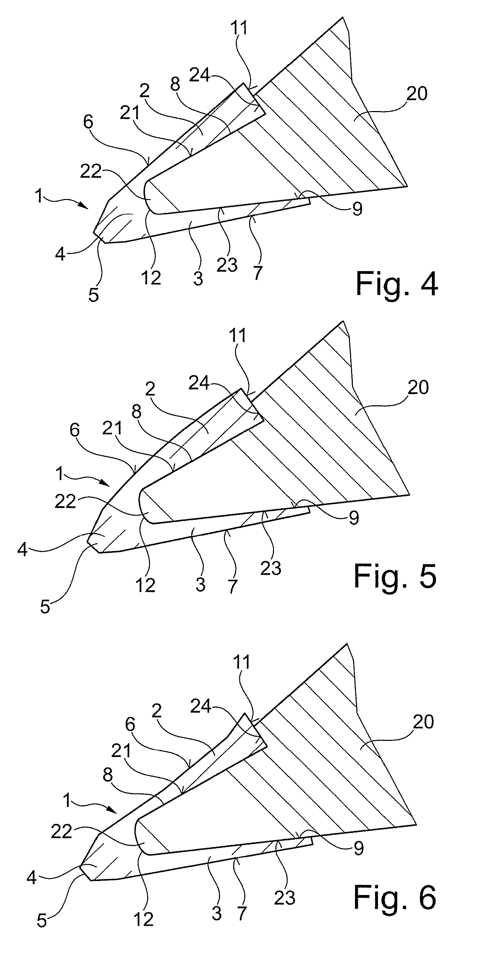

Figur 4 zeigt eine weitere Ausgestaltungsvariante eines erfindungsgemäßen Werkzeuges. Wie diese Darstellung erkennen lässt, weist das Werkzeug ein Endstück 22 auf. Das Endstück 22 kann zungenförmig ausgebildet sein. Im Bereich des Endstückes 22 ist das Hartstoffelement 1 befestigt, insbesondere verlötet oder verklebt. Das Endstück 22 bildet zwei Befestigungsflächen 21,23. Diese können korrespondierend zu dem Winkel β, welcher zwischen den Schenkeln 2,3 eingeschlossen ist zueinander angestellt sein. Im Bereich der Oberseite des Endstückes 22 ist eine Stützfläche 24 gebildet. Das Hartstoffelement 1 stützt sich mittelbar oder unmittelbar gegenüber der Stützfläche 24 mit einer Abschlussfläche 11 ab. Die Abschlussfläche 11 kann dabei von dem linksseitigen Ende des Schenkels 2 gebildet werden. Wie die Zeichnung veranschaulicht, stehen die Innenoberflächen 8 und 9 im Winkel βzueinander, wohingegen die Außenflächen 6,7 im Winkel α zueinander angestellt sind. Wie oben erwähnt wurde, kann der Winkel α von dem Winkel β abweichen. Daher ergibt sich eine variierende Dicke der Schenkel 2,3 in Richtung der Längserstreckung der Schenkel 2,3. Erfindungsgemäß kann die Dicke entweder zunehmen, wie dies beispielsweise in dem gezeigten Ausführungsbeispiel beim Schenkel 2 der Fall ist oder die Dicke kann abnehmen, wie dies Schenkel 3 veranschaulicht. Zur Befestigung des Hartstoffelements 1 kann, wie gesagt eine stoffschlüssige Verbindung verwendet sein. Dabei ist es vorzugsweise so, dass die Schenkel 2,3 großflächig, vorzugsweise vollflächig an ihren Innenoberflächen 8,9 unter Vermittlung des stoffschlüssigen Materials auf den Befestigungsflächen 21,23 abgestützt sind. Weiterhin kann es auch vorgesehen sein, dass der Übergangsabschnitt 12 unter Vermittlung des stoffschlüssigen Verbindungsmaterials gegenüber dem freien Ende des Endstückes 22 abgestützt ist.

In den Figuren 5-25 sind Variationen eines Werkzeugs gezeigt, die Abwandlungen zu dem Werkzeug gemäß Figur 4 darstellen. Prinzipiell stimmt die konstruktive Gestaltung dieser Werkzeuge überein, weswegen nachstehend nur auf die Unterschiede eingegangen wird und im sonstigen auf die vorstehenden Ausführungen Bezug genommen wird.

Wie Figur 5 zeigt, kann einer der Schenkel 2,3 eine Erhebung aufweisen. Vorliegend ist bei dem oberen Schenkel 2 eine konvexe Erhebung vorgesehen. Diese erstreckt sich zumindest bereichsweise über die Außenfläche 6 des Schenkels 2.

Wie Figur 6 zeigt, kann auch eine Eintiefung an der Außenfläche 6 oder 7 der Schenkel 2 oder 3 vorgesehen sein. Im vorliegenden Ausführungsbeispiel ist eine konkave Einmuldung am oberen Schenkel 2 verwendet.

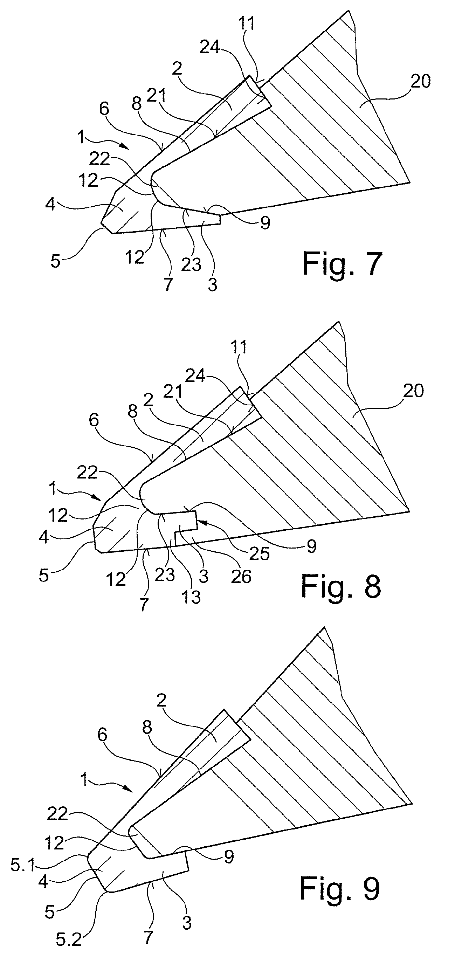

Wie die Figur 7 zeigt, können auch unterschiedliche Schenkellängen an den Schenkeln 2,3 verwirklicht werden.

Figur 8 veranschaulicht, dass auch einer der Schenkel 2 oder 3 einen Absatz 13 aufweisen kann. Der Schenkel 2 oder 3 weist im Anschluss an den Absatz 13 einen Endstück auf, das in eine Ausnehmung 25 des Endstückes 22 eingesetzt ist. Der Absatz 13 kann in der Ausnehmung 25 mittels einer stoffschlüssigen Verbindung aufgenommen sein. Unterhalb des Absatzes 13 bildet das Endstück 22 einen Vorsprung 26, der den Schenkel 2,3 teilweise an seiner Außenfläche 6 oder 7 überdeckt. Diese Konfiguration ermöglicht, ähnlich wie das Zusammenspiel zwischen der Stützfläche 24 und der Abschlussfläche 11 eine exakte Ausrichtung des Hartstoffelements 1 gegenüber dem Endstück 22.

Wie Figur 9 zeigt, kann das Hartstoffelement 1 auch eine Verdrängerkante im Arbeitsbereich 5 bilden, wobei die Verdrängerkante von dem Ansatz 4 gebildet ist. Die Verdrängerkante 5 geht über Übergangsabschnitte 5.1,5.2, welche gerundete Bereiche darstellen in die Außenflächen 5,6 der Schenkel 2,3 über.

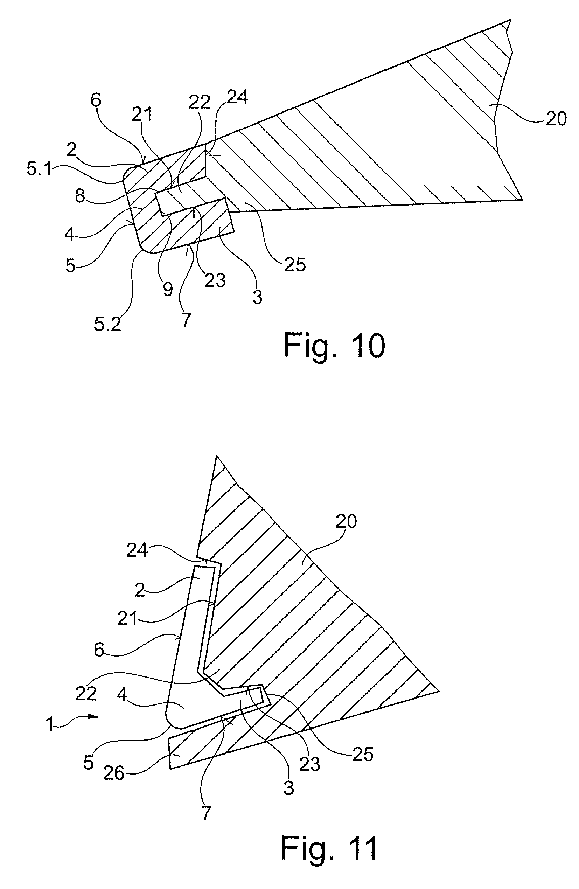

Figur 10 zeigt wieder ein Werkzeug mit Verdrängerkante, wobei die Verdrängerkante über die Übergangsbereiche 5.1,5.2 gerundet in die Außenflächen 5,6 übergeht. Das Hartstoffelement 1 gemäß Figur 10 ist in Form eines Schuhs ausgebildet, welcher relativ kurze Längen der Schenkel 2,3 aufweist.

In Figur 11 ist ein weiteres Ausführungsbeispiel eines erfindungsgemäßen Werkzeugs gezeigt. Wie diese Darstellung veranschaulicht, weist das Hartstoffelement 1 im Wesentlichen die Geometrie gemäß den Figuren 1-3 auf, wobei jedoch der Schenkel 3 kürzer ist als der Schenkel 2. Der Schenkel 3 ist in eine Ausnehmung 25 des Endstückes 22 eingesetzt. Die Außenfläche 7 des Schenkels 3 ist teilweise oder vollständig von einem Vorsprung 26 des Endstückes 22 überdeckt. In der Ausnehmung 25 kann der Schenkel 3 und gegebenenfalls auch der Ansatz 4 unter Vermittlung des stoffschlüssigen Verbindungsmaterials an das Endstück 23 angekoppelt sein. Im gezeigten Ausführungsbeispiel sind zwar unterschiedliche Schenkellängen gezeigt. Denkbar ist jedoch auch, dass die Schenkel 2,3 eine gleiche Länge aufweisen. Weiterhin denkbar ist es das zusätzlich oder alternativ auch der obere Schenkel 22 in einer entsprechenden Ausnehmung des Endstückes 22 aufgenommen ist. Während des Betriebseinsatzes kann sich der Vorsprung 26 kontinuierlich zumindest bereichsweise abschleifen, sodass der Schenkel 3 zunehmend freigelegt wird. Er kann seine Schutzwirkung dann voll entfalten. Mit einer solchen Werkzeugkonfiguration kann weiterhin eine optimale Ausrichtung des Hartstoffelements 1 gegenüber dem Endstück 22 erreicht werden.

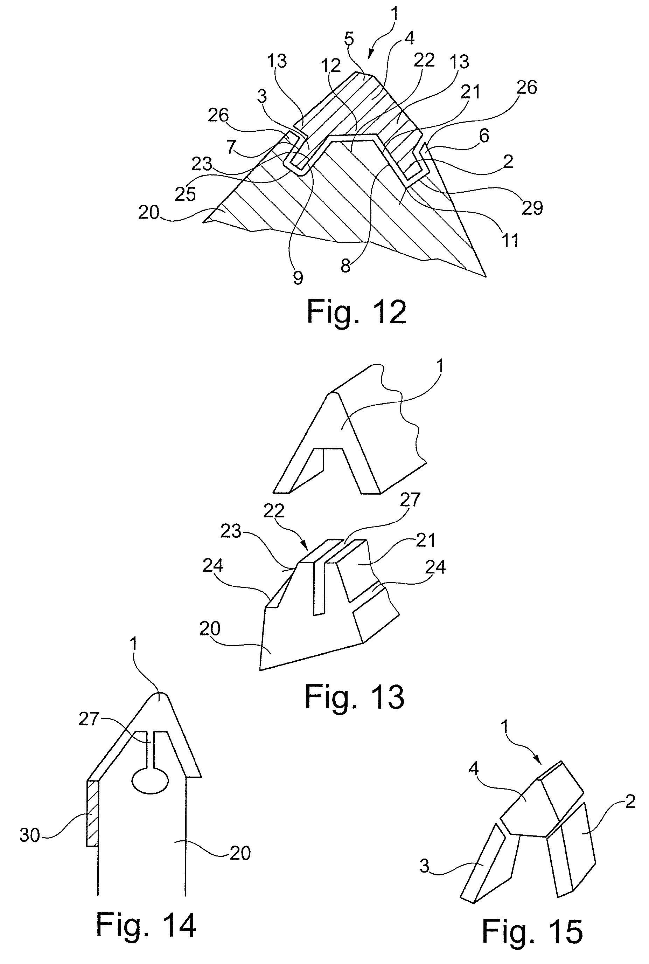

Figur 12 zeigt ein Werkzeug, bei dem das Hartstoffelement 1 mit beiden Schenkeln 2,3 in jeweils eine Ausnehmung 25 eingesetzt ist. Dabei sind wieder Absätze 13 an den Schenkeln 2,3 vorgesehen, die von Vorsprüngen 26 überdeckt sind. Auch hier können die Schenkel 2,3 in den Ausnehmungen 25 unter Vermittlung von stoffschlüssigen Verbindungsmaterial an dem Endstück 22 befestigt sein. Die Außenflächen 6,7 des Ansatzes 4 und oder der Schenkel 2 oder 3 können mit konvexer oder wie vorliegend konkaver Geometrie zumindest bereichsweise ausgebildet sein. Auf diese Weise kann Einfluss auf den Materialfluss genommen werden. Im vorliegenden Ausführungsbeispiel sind konkave Geometrien verwendet, die in Form von Deflektorflächen das Material von der Verbindungsstelle zwischen dem Hartstoffelement 1 und dem Endstück 22 wegleiten.

Figur 13 zeigt eine Ausführungsvariante eines Werkzeugs, bei dem beispielsweise das Hartstoffelement 1 gemäß den Figuren 1-3 zum Einsatz kommt. Wie diese Darstellung veranschaulicht, kann das Endstück 22 mit einem Entlastungselement 27 ausgeführt sein. Das Entlastungselement 27 ist vorliegend als schlitzförmige Ausnehmung in das Endstück 22 eingebracht. Mit dem Entlastungselement 27 wird die Steifigkeit des Endstückes 22 reduziert. Dies hat insbesondere dann Vorteile, wenn das Hartstoffelement 1 mittels einer Lotverbindung am Endstück 22 befestigt wird. Aufgrund der unterschiedlichen Wärmeausdehnungskoeffizienten entstehen beim Löten innere Bauteilspannungen. Da das Hartstoffelement 1, welches beispielsweise aus Hartmetall bestehen kann, einen anderen Ausdehnungskoeffizienten hat als das Endstück 22, könnten im Hartstoffelement 1 interne Bauteilspannungen entstehen, die zu einem vorzeitigen Bauteilversagen dann führen können, wenn insbesondere harte Schläge auf das Hartstoffelement einwirken. Mit dem Entlastungselement 27 werden die internen Bauteilspannungen auf das Hartstoffelement 1 erheblich reduziert, was zu einer zuverlässigen Betriebsweise auch im rauen Einsatz führt.

Figur 14 zeigt eine weitere Ausgestaltungsvariante für einen Entlastungselement 27. Dieses ist wieder als Ausnehmung in das Endstück 22 eingebracht. Die Ausnehmung verläuft dabei, ähnlich wie bei Figur 13 schlitzförmige vom freien Ende des Endstückes 22 in das Endstück 22 hinein. Am Fuße des Endstückes 22 ist eine Erweiterung der Ausnehmung vorhanden, die die Steifigkeit weiter reduziert.

Wie Figur 15 zeigt, muss das Hartstoffelement 1 nicht einteilig ausgebildet sein. Denkbar ist es vielmehr auch, dass das Hartstoffelement 1 mehrteilig ausgebildet ist. Beispielsweise kann der Ansatz 4 von einem ersten Hartstoff-Teile gebildet sein, an das die Schenkel 2,3 als separate Bauteile angefügt sind. Die Schenkel 2,3 können über stoffschlüssige Verbindungen an dem Ansatz 4 befestigt werden. Als stoffschlüssige Verbindung eignet sich beispielsweise wieder eine Löt-oder Klebeverbindung.

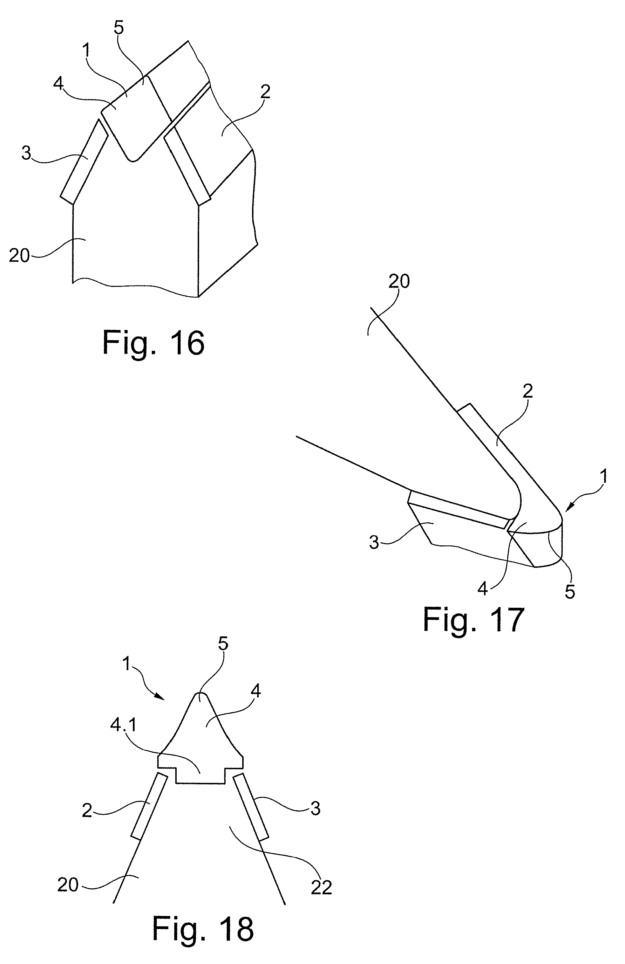

Figur 16 zeigt eine weitere Ausgestaltungsvariante eines mehrteiligen Hartstoffelements 1. Prinzipiell stimmt diese Gestaltung mit der Gestaltung gemäß Figur 15 überein, weswegen auf die vorstehenden Ausführungen Bezug genommen werden kann. Das Hartstoffelement 1 gemäß Figur 16 unterscheidet sich von dem gemäß Figur 15 hinsichtlich der Gestaltung des Ansatzes 4. Wie diese Darstellung zeigt, wurde mehr Material im Bereich des Ansatzes 4 verwendet, sodass hier eine längere Standzeit verwirklicht werden kann.

Figur 17 zeigt eine Ausgestaltung eines mehrteiligen Hartstoffelements 1, bei dem der Ansatz 4 und der Schenkel 2 einteilig miteinander verbunden sind. An den Ansatz 4 kann der weitere Schenkel 3, beispielsweise über eine stoffschlüssige Verbindung, insbesondere eine Lotverbindung angekoppelt sein.

Figur 18 zeigt eine weitere Ausführungsform eines mehrteiligen Hartstoffelements 1, wobei der Ansatz 4 im Bereich seiner Außenseiten mit konkaven Formflächen versehen ist. Zusätzlich weist der Ansatz 4 an seiner den Schenkeln 2,3 zugewandten Seite einen Vorsprung 4.1 auf, der stoffschlüssig in einer Ausnehmung des Endstückes 22 aufgenommen werden kann. Hierdurch wird eine verbesserte Halterung des Ansatzes 4 an dem Endstück 22 erreicht. Die Schenkel 2,3 eines mehrteilig ausgebildeten Hartstoffelements 1 müssen nicht beide gleich lang sein.

Sie können vielmehr auch unterschiedliche Erstreckung in Schenkellängsrichtung aufweisen, wie dies Figur 18 veranschaulicht.

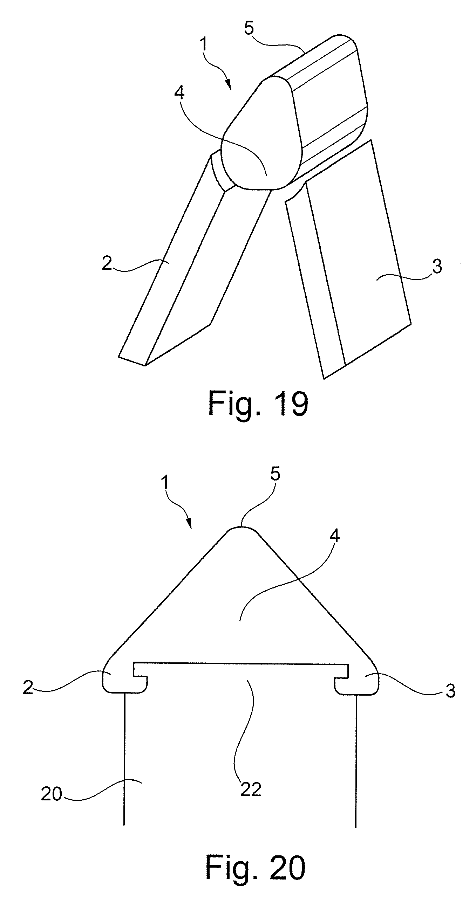

Figur 19 zeigt eine weitere Variante eines mehrteiligen Hartstoffelements 1. Bei diesem Hartstoffelement 1 sind die Außenflächen des Ansatzes 4 mit konvexer Geometrie ausgebildet, um Einfluss auf das Transportverhalten des abgetragenen Materials nehmen zu können.

Figur 20 zeigt eine weitere Ausgestaltungsvariante eines erfindungsgemäßen Werkzeugs. Wie diese Darstellung zeigt, weist der Träger 20 im Bereich seines Endstückes 22 seitliche Führungen, insbesondere Längsführungen auf, die sich quer zur Längserstreckung des Endstückes 22 erstrecken. Diese Führungen bilden Schiebesitze für das Hartstoffelement 1. Das Hartstoffelement 1 kann dementsprechend ebenfalls am zugeordneten Bereich Führungen an den Schenkeln 2,3 aufweisen. Damit lässt sich das Hartstoffelement 1 seitlich auf das Endstück 22 aufschieben. Unter Verwendung einer stoffschlüssigen Verbindung kann dann die abschließende Fixierung des Hartstoffelements 1 an dem Endstück 22 erfolgen. Die stoffschlüssige Verbindung kann dann auch bis in den Bereich der Führungen verlaufen.

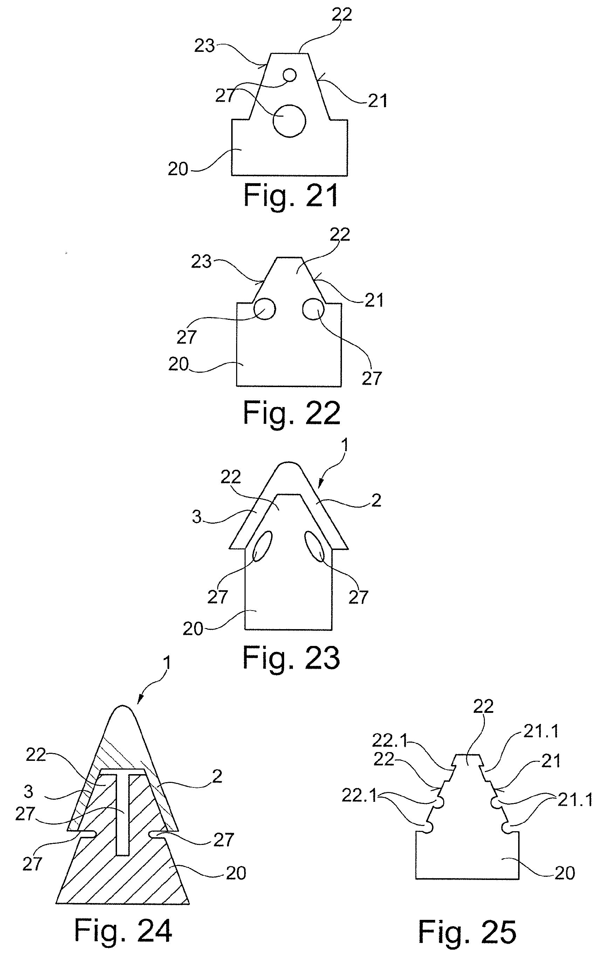

Die Figuren 21-25 zeigen weitere Ausführungsformen von Entlastungselementen 27 im Bereich des Endstückes 22. Die Entlastungselemente 27 können beispielsweise in Form von Bohrungen ausgebildet sein, die seitlich in das Endstück 22 eingebracht sind, wie dies die Figuren 21 bzw. 22 zeigen. Dabei können die Bohrungen am Endstück 22 im Bereich der Enden der Schenkel 2,3 angebracht sein, um hier eine hohe Reduzierung der Steifigkeit zu erreichen. Denkbar ist auch, dass die Entlastungselemente 27 schlitzförmige als Ausnehmungen oder Durchbrüche in das Endstück 22 eingebracht sind, wie dies Figur 23 zeigt. Figur 24 zeigt das in Figur 13 gezeigte schlitzförmige Entlastungselement 27. Zusätzlich können auch noch Entlastungselemente 27 vorgesehen sein, die seitlich in das Endstück 22 eingebracht sind. Diese Entlastungselement der 27 sind wieder als Ausnehmungen ausgeführt.

Figur 25 zeigt, dass die den Schenkeln 2,3 des Hartstoffelements 1 zugewandten Befestigungsflächen 21,23 auch mit Strukturabschnitten 21.1 und oder 23.1 ausgeführt sein können. Diese Strukturabschnitte 21.1,23.1 können als Ausnehmungen oder Erhebungen ausgeführt sein. In gleicher Weise oder alternativ können auch die Innenoberflächen 8,9 der Schenkel 2,3 mit Strukturabschnitten ausgebildet sein. Diese Strukturabschnitte dienen zur Verbesserung der Festigkeit der stoffschlüssigen Verwendung.

## Patentansprüche

1. Werkzeug zur Bearbeitung von Erd-, Gestein-, oder Mineralienschichten, insbesondere von landwirtschaftlichen Flächen, von Straßen und/oder für den Abbau von Gestein und/oder Mineralien, als Schutzelement für Trägersysteme, zur Anordnung von Hartstoffelementen und/oder als Leitelement zur richtungsleitenden Verwendung von vorwiegend fließenden Erd-, Gestein-, oder Mineralienschichten, wobei das Werkzeug einen Träger (20) aufweist, der an einem Arbeitsabschnitt wenigstens ein Hartstoffelement (1) trägt, wobei das Hartstoffelement (1) einen Ansatz (4) aufweist, der einen Arbeitsbereich, insbesondere einen Schneidbereich (5) bildet,
**dadurch gekennzeichnet,**
**dass** an den Arbeitsbereich zwei Schenkel (2,3) des Hartstoffelements (1) angeschlossen sind, die zueinander im Winkel (α) ausgerichtet sind.

2. Werkzeug nach Anspruch 1,
**dadurch gekennzeichnet,**
**dass** die Schenkel (2,3) über einen Übergangsabschnitt (12) zueinander beabstandet gehalten sind, und dass der Übergangsabschnitt (12) insbesondere als Rundung ausgebildet ist oder insbesondere einen Rundungsabschnitt aufweist, wobei insbesondere vorgesehen sein kann, dass der Übergangsabschnitt (12) von dem Ansatz (4) gebildet ist.

3. Werkzeug nach einem der Ansprüche 1 oder 2,
**dadurch gekennzeichnet,**
**dass** zumindest einer der Schenkel (2,3) auf seiner Außenfläche (6) eine Einmuldung und/oder eine Erhebung aufweist, wobei die Einmuldung oder die Erhebung insbesondere in die Außenfläche (6) des Schenkels (2,3) zumindest bereichsweise vorzugsweise kontinuierlich übergeht.

4. Werkzeug nach einem der Ansprüche 1-3 ,
**dadurch gekennzeichnet,**
**dass** sich die Dicke des Schenkels (2,3) gemessen quer zur Längserstreckung des Schenkels (2,3) zumindest bereichsweise verändert, vorzugsweise vom Anbindungspunkt an den Ansatz (4) in Richtung auf das freie Ende des Schenkels (2,3) verjüngt oder verbreitert.

5. Werkzeug nach einem der Ansprüche 1-4 ,
**dadurch gekennzeichnet,**
**dass** zumindest einer der Schenkel (2,3) im Bereich seines freien Endes eine Abschlussfläche (11) aufweist, die einer Stützfläche (24) des Trägers (20) zur Bildung eines Anschlags gegenübersteht.

6. Werkzeug nach einem der Ansprüche 1-5 ,
**dadurch gekennzeichnet,**
**dass** die Schenkel (2,3) ausgehend von ihrer Anbindungsstelle an den Ansatz (4) eine unterschiedliche Erstreckung in Richtung der Längserstreckung der Schenkel (2,3) aufweisen

7. Werkzeug nach einem der Ansprüche 1-6,
**dadurch gekennzeichnet,**
**dass** der Arbeitsbereich eine Schneide des Schneidbereich (5) bildet, oder dass der Arbeitsbereich eine Verdrängerkante bildet, die insbesondere über gerundete Übergangsbereiche (5.1,5.2) in die Außenflächen (6,7) der Schenkel (2,3) mittelbar oder unmittelbar übergeht.

8. Werkzeug nach einem der Ansprüche 1-7,
**dadurch gekennzeichnet,**
**dass** zumindest einer der Schenkel (2,3) in eine Ausnehmung (25) des Trägers (20) eingesetzt ist und/oder, dass zumindest einer der Schenkel (2,3) an seiner Außenfläche (6,7) eine Stufe bildet

9. Werkzeug nach einem der Ansprüche 1-8,
**dadurch gekennzeichnet,**
**dass** der Träger (20) ein Entlastungselement (27) zur Reduzierung der Bauteilsteifigkeit im Bereich des Hartstoffelements (1) aufweist, besondere eine Ausnehmung als Entlastungselement bildet.

10. Werkzeug nach einem der Ansprüche 1-9,
**dadurch gekennzeichnet,**
**dass** zumindest einer der Schenkel (2,3) an den Ansatz (4), vorzugsweise über eine stoffschlüssige Verbindung angekoppelt ist.

11. Hartstoffelement (1), insbesondere zur Verwendung an einem Werkzeug
gemäß einem der Ansprüche 1-10,
wobei das Hartstoffelement (1) als Schneidelement zur Bearbeitung von Erd-, Gestein-, oder Mineralienschichten, insbesondere von landwirtschaftlichen Flächen, von Straßen und/oder für den Abbau von Gestein und/oder Mineralien, als Schutzelement für Trägersysteme, zur Anordnung von Hartstoffelementen und/oder als Leitelement zur richtungsleitenden Verwendung von vorwiegend fließenden Erd-, Gestein-, oder Mineralienschichten ausgebildet ist,
**dadurch gekennzeichnet,**
**dass** das Schneidelement zwei in einem Winkel (α) zueinander beabstandete Schenkel (2, 3) aufweist, welche den Schneidbereich eines Trägers mindestens teilweise überdecken.

12. Hartstoffelement (1) nach Anspruch 11,
**dadurch gekennzeichnet,**
**dass** an den zueinander beabstandeten Schenkeln (2, 3) ein Ansatz (4) angeformt ist, welcher einen Schneidbereich (5) des Hartstoffelementes (1) bildet.

13. Hartstoffelement (1) nach Anspruch 11 oder 12,
**dadurch gekennzeichnet,**
**dass** die beiden Schenkel (2, 3) mit ihren Außenoberflächen (6, 7) einen Winkel (α) zwischen 0,1 ° bis 180 ° bilden und /oder,
**dass** die beiden Schenkel (2, 3) mit Ihren inneren Oberflächen (8, 9) einen Winkel (β) bilden, welcher gleich oder ungleich zum Winkel (α) ausgebildet ist.

14. Hartstoffelement (1) nach einem der Ansprüche 11 bis 13,
**dadurch gekennzeichnet,**
**dass** die äußere Oberfläche (6) des Schenkels (2) im Schneidbereich (5) in die äußere Oberfläche (7) des Schenkels (3) übergeht und eine runden, einen scharfkantigen oder polygonen Verlauf aufweist.

15. Hartstoffelement (1) nach einem der Ansprüche 11 bis 14,
**dadurch gekennzeichnet,**
**dass** die Oberflächen des Hartstoffelementes (1) mittels einer Oberflächenbearbeitung eine erhöhte Oberflächenrauheit aufweisen.
